# EUROPEAN PATENT APPLICATION

(11) **EP 4 656 272 A1**
(43) Date of publication of application: **03.12.2025**
(21) Application number: 25177714.0
(22) Date of filing: 20.05.2025
(51) Int. Cl.: B01D 53/04

(54) **FIBERBED MIST COLLECTOR WITH IMPROVED FILTERING**

(30) Priority: 21.05.2024 US 202463650191 P
(71) Applicant: Astec, Inc., Chattanooga TN 37407 (US)
(72) Inventor: CHOATE, Catherine Sutton, Chattanooga, 37407 (US)
(74) Representative: Ashton, Gareth Mark

(57) **Abstract**

A fiberbed mist collector and method of use for filtering gas emissions having contaminants, including one or more unwanted gases that are produced during an asphalt concrete production process. The fiberbed mist collector includes a housing, a pre-filter area for receiving gases, a transition area for receiving gas emissions from the pre-filter area, a primary filter area provided with one or more primary filters, a liquid collecting chamber configured to collect liquid waste material falling from the primary filter area, a housing outlet, and an exhaust stack that receives gas emissions from the housing. A pre-filter is located between the pre-filter area and the transition area for filtering out particulate matter that is entrained with the gas emissions. Condensing filters are provided in the primary filter area to condense at least a portion of the gas emissions. An acid-impregnated filter removes at least one non-condensing gas from the gas emissions.

## Description

### CROSS-REFERENCE TO RELATED APPLICATION

This application claims the benefit of U.S. Provisional Patent Application No. 63/650,191, filed on May 21, 2024, and titled FIBERBED WITH CHARCOAL, which is incorporated herein by reference in its entirety.

### FIELD

This disclosure relates to the removal and remediation of undesirable pollutants, including non-condensing gases, produced in an asphalt production process. More specifically, this disclosure relates to removal of undesirable pollutants, include non-condensing gases, using a fiberbed mist collector having an acid-impregnated filter during an asphalt concrete production process.

### BACKGROUND

Asphalt, also known as bitumen, is a byproduct of crude oil refining. It comprises a mixture of aggregates (e.g., sand, gravel, or crushed stone) and a binder. During production, these components are heated to elevated temperatures, making the process energy-intensive and particularly polluting. The primary pollutants produced during asphalt production processes include volatile organic compounds (VOCs), nitrogen oxides (NOₓ), sulfur dioxide (SO₂), carbon monoxide (CO), particulate matter (PM), and formaldehyde (HCHO). VOCs are emitted during the handling and mixing of asphalt. They react with sunlight to form ground-level ozone, a major component of smog. Elevated levels of ozone can cause respiratory problems, exacerbate asthma, and reduce lung function, especially in vulnerable populations such as children and the elderly. NOₓ contributes to the formation of ozone and particulate matter. It can cause or worsen respiratory conditions and has been linked to heart disease. Moreover, NOₓ is a significant precursor to acid rain, which harms ecosystems and structures. SO₂ can cause respiratory illnesses and is a primary contributor to acid rain, affecting both terrestrial and aquatic ecosystems. CO can reduce oxygen delivery to the body's organs and tissues. High exposure levels can lead to severe health issues or even death. Chronic exposure to PM can lead to cardiovascular and respiratory diseases and has been linked to premature death.

Due to these adverse effects, including to humans and the environment, it is desirable to treat, capture, convert, or otherwise render safe (or at least safer) these and other pollutants that result from the asphalt production process. Additionally, such remediation may be required by governmental regulations, industry standards, community expectations, etc.

The methods of remediating pollutants vary widely and depend on the nature of the pollutant. For example, VOCs may be removed from asphalt waste gas (i.e., blue gas) through various methods, including adsorption, thermal oxidation, and biofiltration. Adsorption captures VOCs on materials like activated carbon. Thermal oxidation combusts VOCs at elevated temperatures, thereby converting them into carbon dioxide and water. Biofiltration uses microorganisms to break down VOCs in a controlled environment.

Condensing filters are another common method used to remove pollutants from asphalt production. Condensing filters cool polluted air to the point that gaseous pollutants condense. The condensed liquid is then collected and disposed of. Formaldehyde boils at -2°F. Nitrogen monoxide boils at -242°F. Sulfur dioxide boils at 14°F. Nitrogen dioxide boils at 70°F. Condensing blue gas in asphalt production to these temperatures in a condensing filter is impractical. As such other methods have been developed to remove these gases.

Next, NOₓ may be removed from blue gas through methods like selective catalytic reduction (SCR) and selective non-catalytic reduction (SNCR). SCR uses a catalyst to facilitate the reaction between NOₓ and a reductant like ammonia or urea, converting NOₓ to nitrogen and water. SNCR also employs ammonia or urea but relies on elevated temperatures instead of a catalyst for the conversion. CO may be removed from blue gas through catalytic oxidation. This process involves passing the waste gas over a catalyst in the presence of oxygen, converting CO into carbon dioxide (CO₂), a less harmful gas.

Next, SO₂ is currently removed from blue gas primarily through flue gas desulfurization (FGD) methods, such as wet scrubbing. In this process, an alkaline substance, like lime or limestone, is used to react with SO₂, forming a solid byproduct like gypsum. However, these systems are costly to install and maintain and generate waste byproducts that require special handling. Additionally, varying sulfur content in raw materials and fuel can influence removal efficiency.

In a final example, formaldehyde is typically removed using thermal oxidation or advanced filtration methods. Thermal oxidation involves converting formaldehyde into carbon dioxide and water at elevated temperatures. This process requires elevated temperatures for complete oxidation leading to high energy costs. Such systems are expensive and require frequent maintenance to ensure complete oxidation and removal. Additionally, variability in formaldehyde emissions due to different production conditions can lead to inconsistent removal efficiency.

Thus, a need exists for a comparatively inexpensive, easy to maintain, and scalable method of removing formaldehyde, O₂ and NOₓ from blue gas that does not generate difficult to handle byproducts.

### SUMMARY

The above and other needs are met by a fiberbed mist collector for use in removing, filtering, and/or remediating undesirable pollutants, including non-condensing gases, that are produced during an asphalt concrete production process. The fiberbed mist collector may comprise: (1) a housing; (2) an exhaust stack with a stack inlet attached to and in fluid communication with the housing outlet of the housing for receiving gas emissions from the housing, an exhaust fan, and a stack exit through which gas emissions exit the exhaust stack; (3) one or more pre-filters; (4) one or more condensing filters; and (5) at least one acid-impregnated filter configured to remove at least one non-condensing gas from the gas emissions. The housing may comprise: (1) a housing inlet through which the gas emissions enter the housing; (2) a pre-filter area for receiving gases prior to pre-filtering, wherein the pre-filter area is configured to reduce a velocity of gas emissions; (3) a transition area for receiving gas emissions from the pre-filter area prior to primary filtering; (4) a primary filter area provided with one or more primary filters; (5) a liquid collecting chamber disposed vertically below the primary filter area and configured to collect liquid waste material falling from the primary filter area; and (6) a housing outlet through which the gas emissions exit the housing.

The pre-filters may be located between the pre-filter area and the transition area, wherein gas emissions flowing from the pre-filter area to the transition area must pass through the one or more pre-filters. The one or more condensing filters may be disposed in the primary filter area.

The pre-filters may be configured to filter out particulate matter that is entrained with the gas emissions. The condensing filters may be configured to condense at least a portion of the gas emissions.

A method of filtering gas is also disclosed. A fiberbed mist collector comprising: (1) a housing; (2) an exhaust stack with a stack inlet attached to and in fluid communication with the housing outlet of the housing for receiving gas emissions from the housing, an exhaust fan, and a stack exit through which gas emissions exit the exhaust stack; (3) one or more pre-filters; (4) one or more condensing filters; and (5) at least one acid-impregnated filter configured to remove at least one non-condensing gas from the gas emissions can be provided. The provided housing may comprise: (1) a housing inlet through which the gas emissions enter the housing; (2) a pre-filter area for receiving gases prior to pre-filtering, wherein the pre-filter area is configured to reduce a velocity of gas emissions; (3) a transition area for receiving gas emissions from the pre-filter area prior to primary filtering; (4) a primary filter area provided with one or more primary filters; (5) a liquid collecting chamber disposed vertically below the primary filter area and configured to collect liquid waste material falling from the primary filter area; and (6) a housing outlet through which the gas emissions exit the housing.

The provided pre-filters may be located between the pre-filter area and the transition area, wherein gas emissions flowing from the pre-filter area to the transition area must pass through the one or more pre-filters. The provided condensing filters may be disposed in the primary filter area.

The provided pre-filters may be configured to filter out particulate matter that is entrained with the gas emissions. The provided condensing filters may be configured to condense at least a portion of the gas emissions.

Gas would then be filtered through: (1) a pre-filter area, (2) a liquid collecting chamber disposed vertically below the primary filter area and configured to collect liquid waste material falling from the primary filter area, (3) a housing outlet through which the gas emissions exit the housing, (4) an exhaust stack having a stack inlet attached to and in fluid communication with the housing outlet of the housing for receiving gas emissions from the housing, an exhaust fan, and a stack exit through which gas emissions exit the exhaust stack, (5) one or more pre-filters located between the pre-filter area and the transition area, wherein gas emissions flowing from the pre-filter area to the transition area must pass through the one or more pre-filters and wherein the one or more pre-filters are configured to filter out particulate matter that is entrained with the gas emissions, (6) one or more condensing filters disposed in the primary filter area and configured to condense at least a portion of the gas emissions, and (7) at least one acid-impregnated filter configured to remove at least one non-condensing gas from the gas emissions.

### NOTES ON CONSTRUCTION

The use of the terms "a", "an", "the" and similar terms in the context of describing the invention are to be construed to cover both the singular and the plural, unless otherwise indicated herein or clearly contradicted by context. The terms "comprising", "having", "including" and "containing" are to be construed as open-ended terms (i.e., meaning "including, but not limited to,") unless otherwise noted. The terms "substantially", "generally" and other words of degree are relative modifiers intended to indicate permissible variation from the characteristic so modified. The use of such terms in describing a physical or functional characteristic of the invention is not intended to limit such characteristic to the absolute value which the term modifies, but rather to provide an approximation of the value of such physical or functional characteristics.

Terms concerning attachments, coupling and the like, such as "connected" and "interconnected", refer to a relationship wherein structures are secured or attached to one another either directly or indirectly through intervening structures, as well as both moveable and rigid attachments or relationships, unless specified herein or clearly indicated by context. The term "operatively connected" is such an attachment, coupling or connection that allows the pertinent structures to operate as intended by virtue of that relationship.

The use of any and all examples or exemplary language (e.g., "such as" and "preferably") herein is intended merely to better illuminate the invention and the preferred embodiment thereof, and not to place a limitation on the scope of the invention. Nothing in the specification should be construed as indicating any element as essential to the practice of the invention unless so stated with specificity.

### BRIEF DESCRIPTION OF DRAWINGS

Further advantages of the invention are apparent by reference to the detailed description when considered in conjunction with the figures, which are not to scale so as to more clearly show the details, wherein like reference numerals represent like elements throughout the several views, and wherein:
FIGURE 1 is an elevation view of fiberbed mist collector according to an embodiment of the present invention; and
FIGURE 2 is an internal view of the fiberbed mist collector shown in FIGURE 1.

### DETAILED DESCRIPTION

The present disclosure relates to an improved fiberbed mist collector adapted for use in filtering gas emissions having contaminants, including one or more unwanted gases that are produced during an asphalt concrete production process. The contaminants (e.g., unwanted gases) may include non-condensing gases such as formaldehyde (HCHO), nitrogen oxide (NOx), and sulfur dioxide (SO2). In preferred embodiments, as detailed below, the fiberbed mist collector includes a housing, an exhaust stack, one or more pre-filters, one or more condensing filters, and at least one acid-impregnated filter configured to remove at least a portion of at least one contaminant (e.g., non-condensing gas) from the gas emissions.

The housing includes a housing inlet through which the gas emissions enter the housing, a pre-filter area for receiving gases prior to a pre-filtering step, a transition area for receiving gas emissions from the pre-filter area prior to a primary filtering step, a primary filter area provided with the primary filters, a liquid collecting chamber disposed vertically below the primary filter area and configured to collect liquid waste material falling from the primary filter area during the primary filtering step, and a housing outlet through which the gas emissions exit the housing. Preferably, the pre-filter area is configured to reduce a velocity of the gas emissions so as to cause at least a portion of contaminants entrained with the gas emissions, which are formed by sufficiently heavy particles, to drop out of the gas emission stream. One or more pre-filters may be located within the housing between the pre-filter area and the transition area. The housing is preferably configured such that the gas emissions must flow from the pre-filter area to the transition area through the one or more pre-filters to filter out particulate matter that is entrained with the gas emissions. The primary filters located in the primary filter area preferably include at least one condensing filter configured to condense at least a portion of the gas emissions. Next, the fiberbed mist collector includes at least one acid-impregnated filter that is configured to remove at least one non-condensing gas from the gas emissions. Lastly, the exhaust stack preferably includes a stack inlet attached to and in fluid communication with the housing outlet, an exhaust fan, and a stack exit. The exhaust stack receives gas emissions from the housing. The gas emissions are then urged out of the stack exit by the exhaust fan to exist the exhaust stack.

In preferred embodiments, the fiberbed mist collector includes a permeable surface that forms the floor surface of the primary filter area and, simultaneously, the ceiling of the liquid collecting chamber. Accordingly, the permeable floor surface is preferably located vertically above the liquid collecting chamber and vertically below the one or more condensing filters. Liquid waste produced by the one or more condensing filters falls from the primary filter area, through the permeable floor surface, and into the liquid collecting chamber. Additionally, the liquid collecting chamber preferably includes a drain for draining liquid waste material. A bottom surface of the liquid collecting chamber that collects and contacts liquid waste is sloped toward the drain so that the liquid waste held in the liquid collecting chamber automatically flows towards the drain.

At least one of the pre-filters may be washable. The pre-filters can be fabric filters, cyclone separators, wet scrubbers, cartridge filters, or granular bed filters. The condensing filters can be coalescing candle filters, membrane condensing filters, cyclonic condensers, desiccant filters, or fibrous filters. In addition, the housing outlet may be provided with one or more outlet filters. When more than one outlet filter is provided, they may be provided in the form of a stack through which the gas emissions must pass. These outlet filters can be charcoal filters, HEPA filters, ozone generators, photocatalytic oxidation filters, ionizers, zeolite filters, or biofilters. Additionally, the outlet filters may include one or more of the acid-impregnated filters described above that remove at least one non-condensing gas from the gas emissions.

The fiberbed mist collector may include a fire suppression system. Additionally, in certain embodiments, the fiberbed mist collector includes a thermocouple located near the housing inlet that is configured to read the temperature of gases entering the housing inlet. The fiberbed mist collector may include a damper capable of allowing or preventing air entry into the housing. The fiberbed mist collector may include a controller configured to receive temperature data from the thermocouple and to then send control signals instructing the damper to partially or fully open to allow air to enter the housing when the temperature of the gases entering the housing inlet exceed a pre-determined maximum temperature. The controller may be configured to receive temperature data from the thermocouple and sound an audible alarm if the gases entering the housing inlet exceed a pre-determined maximum temperature. In certain cases, the fiberbed mist collector may include a thermocouple at the stack exit. The thermocouple at the stack exit may send temperature data to a controller configured to receive temperature data from the thermocouple and sound an audible alarm if the gases leaving the stack exit exceed a pre-determined temperature.

In use, gas emissions containing one or more unwanted gases and potentially other contaminants, including possibly particulate matter, may enter the housing through the housing inlet and pass into the pre-filter area. The unwanted gases and the other contaminants, including particulate matter, may be described herein, either collectively or individually, as "contaminants" in the gas emissions. The pre-filter area is configured to reduce a velocity of the gas emissions to cause at least a portion of contaminants entrained with the gas emissions that are formed by sufficiently heavy particles to drop out of the gas emission stream. The gas emissions then pass through the pre-filters, which preferably filter out at least a portion of the particulate matter entrained with the gas emission. The gas emission then flows into the transition area and is then preferably directed vertically downwards, optionally through the permeable floor surface, and into the liquid collecting chamber. The gas emissions are then directed vertically upwards from the liquid collecting chamber and into the primary filter area. In the primary filter area, at least a portion of the gaseous contaminants in the gas emission stream is condensed by the condensing filters. The condensed gas preferably falls from the condensing filters, through the permeable floor surface, into the liquid collecting chamber. Once condensed and collected in the liquid collecting chamber, the condensed gases may flow down a sloped floor toward a drain.

The non-condensing gas can include HCHO, SO₂, NOx, or a combination thereof, including in equal or unequal amounts. In various embodiments, the fiberbed mist collector is configured to remove at least 80%, at least 90%, or 100% of the at least one non-condensing gases. In various embodiments, the fiberbed mist collector is configured to remove 80% - 100%, 90% - 100%, or 95% - 100% of the at least one non-condensing gases. The fiberbed mist collector may remove at least 80% of formaldehyde. The fiberbed mist collector may remove at least 90% of formaldehyde. The fiberbed mist collector may remove at least 100% of formaldehyde. The fiberbed mist collector may remove 80 to 100% of formaldehyde. The fiberbed mist collector may remove 90 to 100% of formaldehyde. The fiberbed mist collector may remove 95 to 100% of formaldehyde. For example, in certain embodiments, the fiberbed mist collector removes at least 80% or at least 90% of SO2. The fiberbed mist collector may remove at least 100% of SO2. The fiberbed mist collector may remove 80 to 100% of SO2. The fiberbed mist collector may remove 90 to 100% of SO2. The fiberbed mist collector may remove 95 to 100% of SO2..

The fiberbed mist collector may remove at least 80% of NOₓ. The fiberbed mist collector may remove at least 90% of NOₓ. The fiberbed mist collector may remove at least 100% of NOₓ. The fiberbed mist collector may remove 80 to 100% of NOₓ. The fiberbed mist collector may remove 90 to 100% of NOₓ. The fiberbed mist collector may remove 95 to 100% of NOₓ.

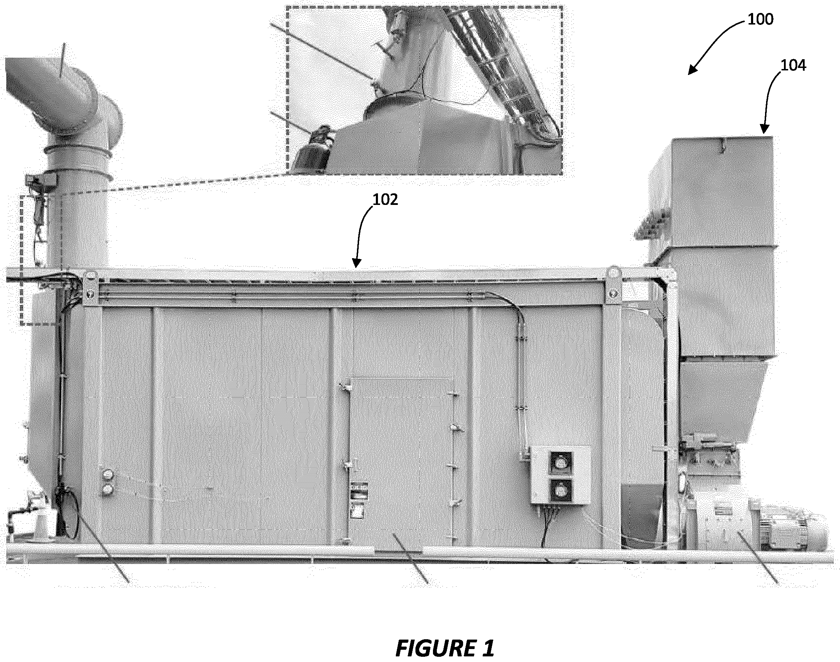

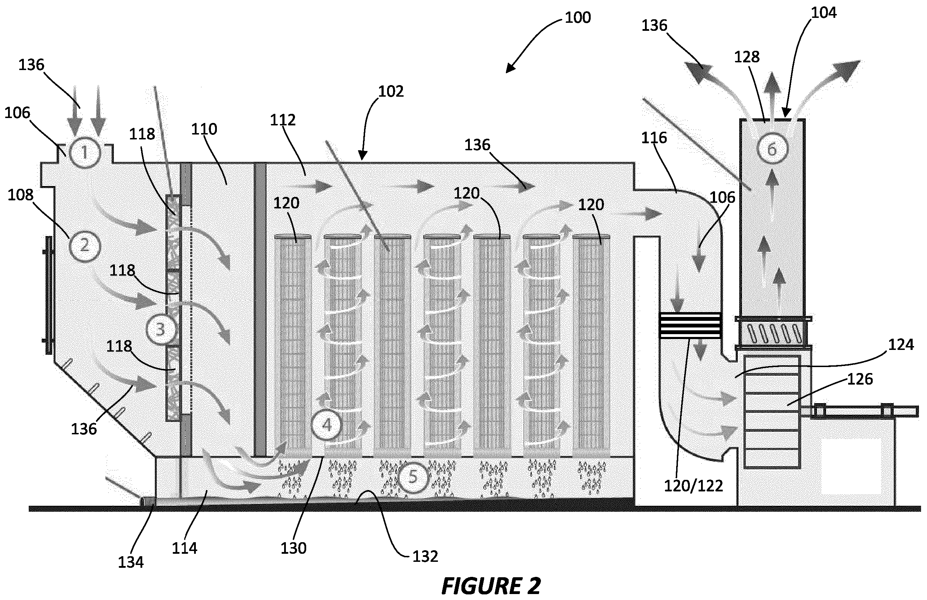

Referring now to the drawings in which like reference characters designate like or corresponding characters throughout the several views, there is shown in **FIGURES 1** and **2** a fiberbed mist collector **100** according to an embodiment of the present invention. The fiberbed mist collector 100 may comprise a housing **102,** and an exhaust stack **104.** The housing 102 may comprise a housing inlet **106,** a pre-filter area **108,** a transition area **110,** a primary filter area **112,** a liquid collecting chamber **114,** a housing outlet **116,** prefilters **118,** condensing filters **120,** and at least one acid impregnated filter **122.** The exhaust stack 104 may comprise a stack inlet **124,** an exhaust fan **126,** and a stack exit **128.**

The primary filter area 112 may have a permeable floor surface **130,** which can form the ceiling of the liquid collecting chamber 114. A floor surface **132** of liquid collecting chamber 114 may sloped toward drain **134.** As would be known to those of skill in the art other configurations are possible. In certain embodiments, including the illustrated embodiment, the drain 134 is located at one end of the floor surface 132 and the floor surface is continuously sloped towards the drain along its entire length. In other cases, the drain 134 is located at some intermediate point of the floor surface 132 of the liquid collecting chamber 114, including centered or off-centered, and the floor slopes towards the drain from each opposing end. In other cases, pumps may be used to actively remove collected liquid from the flat (i.e., non-sloped or minimally sloped) floor surface 132 of the liquid collecting chamber 114. Pumps may also be used to remove condensed liquid collected in the primary filter area 112. In some cases, the condensed liquid can be drained from the liquid primary filter area 112 or the liquid collecting chamber 134 using only gravity (i.e., no pumps). Liquid collecting chamber 17 could even comprise fillable and removable containers (not shown) that, when filled with liquid, could be removed and emptied or drained separately.

In certain cases, pre-filters 118 are washable. In certain cases, pre-filters 118 are formed as fabric filters, cyclone separators, wet scrubbers, cartridge filters, or granular bed filters. If pre-filters 19 are wet scrubbers, the wet waste produced may collect at the bottom of transition area 110, where it may enter liquid collecting chamber 114. Condensing filters 120 can be coalescing candle filters, membrane condensing filters, cyclonic condensers, desiccant filters, or fibrous filters.

Next, exhaust fan 126 can comprise a direct drive, a belt drive, or a variable-frequency drive. Exhaust fan 126 can comprise a radial-blade damper or an opposed-blade damper. Exhaust fan 126 may be a radial blade fan, or a backward inclined fan.

When the collector 100 is in use, gas emissions **136** may enter pre-filter area 108 via gas inlet 106. Pre-filter area 108 may be configured to reduce the velocity of gas emissions 136 such that heavy particles drop out of the gas emission stream. Gas emissions 136 may then flow through pre-filters 118, filters out particulate matter before gas emissions flow into transition area 110. Gas emissions 136 may then flow downward through pre-filter area 110 and into liquid collection chamber 114. After entering liquid collection chamber 114, liquid may condense out of the gas emissions 136 and then be collected in liquid collection chamber. Next, gas emissions 136 may then be directed upward into primary filter area 112 and through condensing filters 120, which preferably condense at least a portion of condensable gases entrained with the gas emission. may condense from gas 136 in condensing filters 120 and the condensed liquid may then flow down through the floor 130 of primary filter area 112 and into liquid collecting chamber 114. As noted above, liquid collecting chamber 114 may have a floor 132 sloped toward drain 134.

Inside condensing filters 120, particles of gas emissions 136 may be forced around individual fibers. For example, in certain cases, particles that are 5 microns or larger in diameter preferably collide with and are captured by fibers of the condensing filters 120. In certain embodiments, molecules of gas emission 136 that have diameters in the 1-3 micron range condense when they brush against the edge of a fiber of the condensing filters 120. Meanwhile, molecules of gas emissions 136 having a diameter less than one micron experience Brownian Diffusion into areas of low concentration. As particles near the fiber surface of the condensing filters 120, the particles condense and fall into liquid collection chamber 114 and the concentration of gas particles at the fiber surface decreases. This drives particles from the gas emissions 136 to the fiber surface.

Next, after moving through condensing filters 120, gas emissions 136 preferably flow through the housing outlet 116 and through at least one acid impregnated filter 122. In certain cases, the acid impregnated filter 122 is impregnated by tris-(hydroxymethyl) aminomethaneand can be purchased from FCX performance or Graver Technologies. Alternatively, a triethylenediamine and copper system like that of US 10773235 could be used, or the activated carbon could be impregnated with HMnO₄. Preferably, the acid impregnated filters 122 remove one or more non-condensing gases from the gas emissions 136. Preferably, the one or more acid impregnated filters 122 are designed to remove at least a portion of one or more of the following: formaldehyde, SO₂, or NOₓ from the gas emissions 136. In various embodiments, the at least one acid impregnated filters 122 may remove at least 80%, at least 90%, at least 95%, or at least 100% of the at least one non-condensing gases, which may include one or more of formaldehyde, SO₂, or NOₓ, from gas emissions 136. In various embodiments, the at least one acid impregnated filters 122 may remove 80 to 100%, 90 to 100%, or 95 to 100% of the at least one non-condensing gases from gas emissions 136.

Next, after flowing through the at least one acid impregnated filters 122, the gas emissions 136 may flow through housing outlet 116, driven by exhaust fan 126, and then out of stack exit 128. In various embodiments, exhaust fan 126 may be curved and may comprise modulating opposing blades.

Although this description contains many specifics, these should not be construed as limiting the scope of the invention but as merely providing illustrations of some of the presently preferred embodiments thereof, as well as the best mode contemplated by the inventor of carrying out the invention. The invention, as described herein, is susceptible to various modifications and adaptations as would be appreciated by those having ordinary skill in the art to which the invention relates

## Claims

1. A fiberbed mist collector adapted for use in filtering gas emissions having contaminants, including one or more unwanted gases that are produced during an asphalt concrete production process, the fiberbed mist collector comprising:
a housing having:
a housing inlet through which the gas emissions enter the housing;
a pre-filter area for receiving gases prior to pre-filtering, wherein the pre-filter area is configured to reduce a velocity of gas emissions;
a transition area for receiving gas emissions from the pre-filter area prior to primary filtering;
a primary filter area provided with one or more primary filters;
a liquid collecting chamber disposed vertically below the primary filter area and configured to collect liquid waste material falling from the primary filter area; and
a housing outlet through which the gas emissions exit the housing;
an exhaust stack having a stack inlet attached to and in fluid communication with the housing outlet of the housing for receiving gas emissions from the housing, an exhaust fan, and a stack exit through which gas emissions exit the exhaust stack;
one or more pre-filters located between the pre-filter area and the transition area, wherein gas emissions flowing from the pre-filter area to the transition area must pass through the one or more pre-filters and wherein the one or more pre-filters are configured to filter out particulate matter that is entrained with the gas emissions;
one or more condensing filters disposed in the primary filter area and configured to condense at least a portion of the gas emissions; and
at least one acid-impregnated filter configured to remove at least one non-condensing gas from the gas emissions.

2. The fiberbed mist collector of claim 1 further comprising a permeable floor surface disposed vertically above the liquid collecting chamber and vertically below the one or more condensing filters, such that liquid waste produced by the one or more condensing filters falls from the primary filter area, through the permeable floor surface, and into the liquid collecting chamber.

3. The fiberbed mist collector of claim 1 or 2 further comprising a drain for draining liquid waste material from the liquid collecting chamber, wherein a bottom surface of the liquid collecting chamber that collects and contacts liquid waste is sloped toward the drain so that the liquid waste held in the liquid collecting chamber automatically flows towards the drain.

4. The fiberbed mist collector of any preceding claim wherein the one or more pre-filters includes at least one washable filter.

5. The fiberbed mist collector of any preceding claim wherein the one or more condensing filters comprise coalescing candle filters.

6. The fiberbed mist collector of any preceding claim wherein gas emissions flowing through the housing are directed vertically downwards in the transition area after passing through the one or more pre-filters and into the liquid collecting chamber and are then directed vertically upwards from the liquid collecting chamber and into the primary filter area.

7. The fiberbed mist collector of any preceding claim further comprising a fire suppression system.

8. The fiberbed mist collector of any preceding claim further comprising:
a thermocouple disposed proximate the housing inlet and configured to read a temperature of gases entering the housing inlet;
a damper that, when opened, allows fresh air to enter the housing via the damper and, when closed, prevents fresh air from entering the housing via the damper; and
a controller that receives temperature readings from the thermocouple and is configured to send control signals to the damper based on the temperature of gases entering the housing inlet, including a first control signal calling for the damper to open when the temperature of gases entering the housing inlet exceed a pre-determined maximum temperature.

9. The fiberbed mist collector of any preceding claim further comprising one or more outlet filters disposed in the housing outlet of the housing, wherein the one or more outlet filters optionally include at least one charcoal filter or the at least one acid-impregnated filter.

10. The fiberbed mist collector of any preceding claim wherein the at least one non-condensing gas comprises at least one of formaldehyde and sulfur dioxide.

11. A method of filtering gas comprising:
a. providing a fiberbed mist collector comprising:
a housing having:
a housing inlet through which the gas emissions enter the housing;
a pre-filter area for receiving gases prior to pre-filtering, wherein the pre-filter area is configured to reduce a velocity of gas emissions;
a transition area for receiving gas emissions from the pre-filter area prior to primary filtering;
a primary filter area provided with one or more primary filters;
a liquid collecting chamber disposed vertically below the primary filter area and configured to collect liquid waste material falling from the primary filter area; and
a housing outlet through which the gas emissions exit the housing;
an exhaust stack having a stack inlet attached to and in fluid communication with the housing outlet of the housing for receiving gas emissions from the housing, an exhaust fan, and a stack exit through which gas emissions exit the exhaust stack;
one or more pre-filters located between the pre-filter area and the transition area, wherein gas emissions flowing from the pre-filter area to the transition area must pass through the one or more pre-filters and wherein the one or more pre-filters are configured to filter out particulate matter that is entrained with the gas emissions;
one or more condensing filters disposed in the primary filter area and configured to condense at least a portion of the gas emissions; and
at least one acid-impregnated filter configured to remove at least one non-condensing gas from the gas emissions;
b. providing a gas emission having contaminants, including one or more unwanted gases that are produced during an asphalt concrete production process; and
c. using the fiberbed mist collector removing a portion of at least one of the contaminants from the gas emission.

12. The method of claim 11 wherein the contaminant comprises particulate matter, and wherein the portion of the particulate matter is removed from the gas emission by the one or more pre-filters.

13. The method of claim 11 or 12 wherein the contaminant comprises a condensing gas, and wherein the portion of the condensing gas is removed from the gas emission by the one or more condensing filters.

14. The method of claim 11, 12 or 13 wherein the contaminant comprises a non-condensing gas, wherein the portion of the non-condensing gas is removed from the gas emission by the at least one acid-impregnated filter, and wherein the contaminant optionally comprises at least one of formaldehyde and sulfur dioxide.

15. The method of claim 14 wherein at least 80% of the at least one non-condensing gas is removed.
